# DEMANDE DE BREVET EUROPEEN

(11) **EP 0 850 600 A1**
(43) Date de publication de la demande: **01.07.1998**
(21) Numéro de dépôt: 97470026.2
(22) Date de dépôt: 03.11.1997
(51) Int. Cl.: A61C 5/02, A61C 3/02

(54) **Alésoir dentaire à efficacité de coupe améloirée**

(30) Priorité: 20.11.1996 FR 9614347
(71) Demandeur: MICRO MEGA INTERNATIONAL MANUFACTURES (Société Anonyme), 25000 Besançon (FR)
(72) Inventeur: Badoz, Jean-Marie, 25300 Doubs (FR); Vulcain, Jean-Marie, 35500 Vitre (FR); Calas, Paul, 31400 Toulouse (FR); Euvrard, Hubert, 25870 Geneuille (FR)
(74) Mandataire: Poupon, Michel

(57) **Abrégé**

La présente invention concerne un alésoir dentaire (2) s'amincissant jusqu'à sa pointe (1), du type comportant des cannelures hélicoïdales présentant sur leurs chants des lèvres coupantes pour l'alésage des canaux dentaires, dans lequel les caractéristiques des conditions de coupe sont définies par d'une part un angle de coupe α déterminé par la tangente à l'arête de coupe au point de coupe et la perpendiculaire à la surface à couper en ce point et d'autre part un angle de dépouille β déterminé par le plan de la surface de coupe et la tangente à la face non active de l'arête de coupe, caractérisé par le fait que la valeur de l'angle de coupe a est supérieur ou égale à zéro et celle de l'angle de dépouille β supérieur à zéro.

## Description

La présente invention a pour objet un alésoir dentaire s'amincissant jusqu'à sa pointe, du type comportant des cannelures hélicoïdales présentant sur leurs chants des lèvres coupantes pour l'alésage des canaux dentaires, dans lequel les caractéristiques des conditions de coupe sont définies par d'une part un angle de coupe α déterminé par la tangente à l'arête de coupe au point de coupe et la perpendiculaire à la surface à couper en ce point et d'autre part un angle de dépouille β déterminé par le plan de la surface de coupe et la tangente à la face non active de l'arête de coupe.

On définira plus précisément les angles α et β ultérieurement.

Dans un processus d'alésage mettant en oeuvre un alésoir du type décrit ci-dessus, il faut trouver un compromis entre les valeurs des angles α et β, qui peuvent affecter des valeurs positives ou négatives, indépendamment l'un de l'autre. En fonction des valeurs choisies le résultat peut aller d'un manque d'efficacité de coupe, qui devra être compensé par des efforts de coupe très importants, à un effet de coupe trop important qui se traduira par un risque de vissage de l'instrument en rotation. De façon connue la suppression de l'effet de vissage peut être assurée par la présence d'un listel sur le pourtour de l'instrument dont l'inconvénient est d'accroître encore les efforts de coupe donc les risques de rupture de l'instrument.

L'invention a pour objet d'optimiser une structure d'alésoir dans laquelle les angles de coupe et de dépouille permettent l'obtention d'une bonne efficacité de coupe en évitant l'effet de vissage.

Conformément à l'invention, ce résultat est obtenu avec un alésoir du type ci-dessus, caractérisé par le fait que la valeur de l'angle de coupe α soit supérieure ou égale à zéro et celle de l'angle de dépouille β soit supérieure à zéro.

De manière préférentielle, l'arête de coupe sera légèrement atténuée, de manière à obtenir une arête légèrement arrondie sans pour autant mettre en cause le bénéfice de l'angle de coupe.

On bénéficie ainsi d'un guidage de l'instrument par une surface de contact faible et une efficacité optimale de coupe dans des conditions de contraintes minimales pour l'instrument réduisant d'autant les risques de rupture.

D'autres caractéristiques de l'invention ressortiront de la description faite ci-après en référence aux dessins annexés dans lesquels :
- les **figures 1A et 1B** illustrent de manière schématique la définition des angles de coupe et de dépouille,
- la **figure 2** illustre schématiquement en coupe un alésoir de l'art antérieur,
- la **figure 3** illustre schématiquement en coupe un alésoir conforme à l'invention,
- la **figure 4** est une variante de mise en oeuvre de l'alésoir de la figure 3 au niveau de la pointe de celui-ci, avec différentes sections possibles en coupe A-A représentées aux figures 4A, 4B, 4C, 4D.

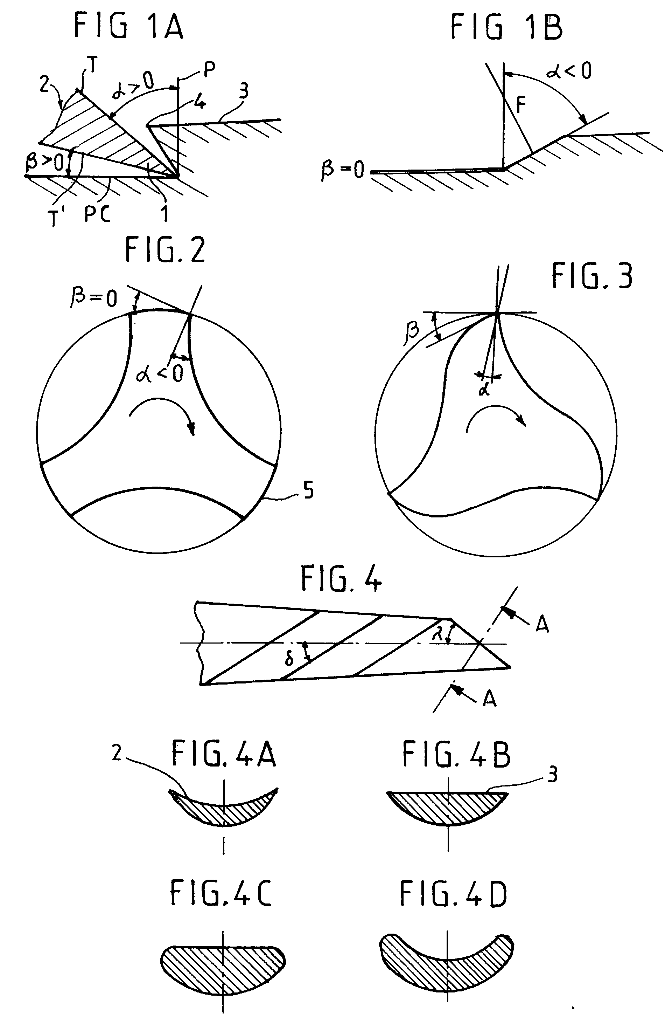

On se référera tout d'abord aux figures 1A et 1B.

On a représenté schématiquement la pointe (1) d'un instrument de coupe (2). La matière à découper est représentée schématiquement par la section (3) avec un redent (4).

L'angle de coupe α est défini par :
- la perpendiculaire P au plan de coupe PC,
- la tangente T à l'arête de coupe au point de coupe.

L'angle de dépouille β est défini par le plan PC et la tangente T' à la face non active de l'arête de coupe.

Dans la représentation de la figure 1A, les valeurs sont :
- α > 0
- β > 0

Dans la représentation de la figure 1B, les valeurs sont :
- α < 0
- β = 0

Dans cette configuration extrême, avec α < 0, l'instrument est repoussé. Il n'y a pas de vissage indésirable, mais il y a une perte d'efficacité considérable, voire pas d'efficacité du tout.

Dans la représentation de la figure 2 qui illustre un alésoir de l'art antérieur, on reproduit les valeurs suivantes :
- α < 0
- β = 0 (ou approximativement)

On réalise un guidage de l'instrument, sans vissage, mais avec une faible efficacité.

L'existence de listels (5) génère une grande surface de contact, donc des frottements importants. Il en découle des couples résistants très importants sur les instruments donc des risques élevés de tension puis de rupture des instruments en cours d'intervention avec tous les inconvénients que cela peut présenter lors d'un travail en bouche pour extraire la partie de l'instrument cassé restée dans le canal.

Un alésoir conforme à l'invention est représenté à la figure 3, en coupe transversale. Il se présente sous la forme d'une hélice à trois branches dans laquelle les valeurs sont les suivantes :
- α ≥ 0
- β > 0

On obtient ainsi une grande efficacité de coupe, sans frottement ni vissage comme pour la représentation de la figure 1A, approximativement. Ceci est renforcé en prévoyant que l'angle de travail de l'arête de coupe soit atténuée ou légèrement arrondie et non vive.

On garde ainsi le bénéfice de la qualité de coupe en supprimant le risque de vissage et en assurant un guidage avec une surface de contact minimale donc un frottement faible.

Selon une caractéristique avantageuse de mise en oeuvre, les pointes des alésoirs (qui sont pour ce qui les concerne de forme générale conique) seront biseautées de sorte que le plan du biseau fasse un angle λ avec l'axe de l'instrument de direction opposée à l'angle δ d'hélice des arêtes coupantes comme représenté à la figure 4, avec une face concave ou une face plane, pour faciliter le travail des praticiens en particulier en évitant la formation de faux canaux. Cette géométrie de pointe permet d'accroître les capacités de coupe de la pointe, ce qui est particulièrement appréciable pour les reprises de traitement de canaux, la pointe devenant très active lorsqu'elle est en contact avec les matériaux d'obturation qui avaient été préalablement mises en place.

De manière à baisser la valeur de l'angle β, on pourra également prévoir que la tangente au point de coupe de l'instrument tend à se superposer à la tangente au diamètre dans lequel est inscrite une section de coupe passant par ledit point de coupe.

## Revendications

1. Alésoir dentaire (2) s'amincissant jusqu'à sa pointe (1), du type comportant des cannelures hélicoïdales présentant sur leurs chants des lèvres coupantes pour l'alésage des canaux dentaires, dans lequel les caractéristiques des conditions de coupe sont définies par d'une part un angle de coupe α déterminé par la tangente à l'arête de coupe au point de coupe et la perpendiculaire à la surface à couper en ce point et d'autre part un angle de dépouille β déterminé par le plan de la surface de coupe et la tangente à la face non active de l'arête de coupe, caractérisé par le fait que la valeur de l'angle de coupe a est supérieur ou égale à zéro et celle de l'angle de dépouille β supérieur à zéro et en ce que l'arête de coupe est légèrement atténuée, pour obtenir une arête légèrement arrondie.

2. Alésoir dentaire selon la revendication 1, caractérisé en ce que les pointes des alésoirs sont biseautées de sorte que le plan du biseau fasse un angle λ avec l'axe de l'instrument de direction opposée à l'angle δ d'hélice des arêtes coupantes avec une face concave ou une face plane.

3. Alésoir dentaire selon l'une quelconque des revendications 1 et 2, caractérisé en ce que la tangente au point de coupe de l'instrument tend à se superposer à la tangente au diamètre dans lequel est inscrite une section de coupe passant par ledit point de coupe.
